# EUROPEAN PATENT APPLICATION

(11) **EP 4 711 064 A1**
(43) Date of publication of application: **18.03.2026**
(21) Application number: 24806853.8
(22) Date of filing: 15.03.2024
(51) Int. Cl.: B23C 5/10, B23B 27/20, B23C 5/16, B23P 15/34

(54) **END MILL AND METHOD FOR MANUFACTURING END MILL**

(30) Priority: 12.05.2023 JP 2023079643
(71) Applicant: Kanefusa Kabushiki Kaisha, Ohguchi-cho, Niwa-gun Aichi 480-0192 (JP)
(72) Inventor: OGASAWARA, Makoto, Niwa-gun, Aichi 480-0192 (JP); FUJITA, Shun, Niwa-gun, Aichi 480-0192 (JP)
(74) Representative: Maikowski & Ninnemann Patentanwälte Partnerschaft mbB
(86) International application number: PCT/JP2024/010215
(87) International publication number: WO 2024/236898

(57) **Abstract**

[Solution to the Problem] An end mill (1) has a rod-shaped base material (2) made of cemented carbide. Two to four flutes (3) extend along on a surface of the base material (2) with a helix angle (3a) of 0° to 45° relative to an axial direction of the base material (2). A normal cutting-edge groove (4) extends linearly between the flutes (3). A normal cutting-edge (11), which is a PCD tip (10), is disposed in the normal cutting-edge groove (4) and protrudes from the normal cutting-edge groove (4). A cutting-edge lead angle (11a) of the normal cutting-edge (11) is 15° to 55°. A reverse cutting-edge groove (5) is located farther from an end of the base material (2) than the normal cutting-edge groove (4) and extends linearly between the flutes (3). A reverse cutting-edge (12), which is a PCD tip (10), is disposed in the reverse cutting-edge groove (5) and protrudes from the reverse cutting-edge groove (5). A cutting-edge lead angle of the reverse cutting-edge (12) is -55° to -15°.

## Description

### [Technical Field]

The present disclosure relates to end mills and a method for manufacturing the end mills. The end mill may be used, for example, when processing wood such as wood boards, solid wood, laminated wood, and plywood, or when processing nonferrous workpieces such as aluminum and copper, or when processing workpieces such as resin and ceramic materials.

### [Background Art]

JP2021-053794A, JP2013-528504A, JP2019-508270A and JP2015-510845A, and JP5674815B2, JP5986254B1 and JP7244970B1 disclose tools referred to as end mills or milling cutters used for router machining and the like on workpieces. For example, end mills with PCD (sintered polycrystalline diamond) tips are typically used for processes such as cutting, grooving, and machining the end faces of a workpiece, such as a wood board with a sheet attached to its surface. The PCD tips, which serve as the cutting-edges, are brazed to the base material of the end mill. A plurality of PCD tips are arranged in the axial direction of the base material. A PCD tip is brazed near the end of the base material as a normal cutting-edge with a positive cutting-edge lead angle. PCD tips are brazed at locations farther from the end of the base material than the normal cutting-edge as reverse cutting-edges with a negative cutting-edge lead angle. When cutting a wood board with the end mill, the normal cutting-edge and the reverse cutting-edges clamp both surfaces of the wood board in the axial direction of the base material. This prevents surface chipping, corner chipping, burrs, and remaining uncut portions without causing the sheet attached to the surface of the wood board to peel off during cutting.

Typically, steel such as alloy steel is used for a base material of an end mill. Grooves are machined into the surface of the base material for brazing PCD tips. The grooves are formed by cutting the surface of the base material, for example, with an end mill having a smaller diameter than the PCD end mill.

Conventionally, end mills have been provided that include heavy metal (sintered tungsten alloy powder), which exhibits higher rigidity than steel, as the base material. By employing a base material made of rigid material, it is possible to withstand cutting vibrations, for example, when performing high-feed processing with an increased feed rate, or when processing requires a long and slender end mill with a large ratio of cutter length to cutter diameter. However, the heavy metal base material is not only expensive, but also requires a long time to form grooves on the surface. This increases the manufacturing cost of the end mill and, consequently, increases the cost of products machined with heavy metal end mills.

It is conceivable to provide end mills including cemented carbide as the base material, which is less expensive and more rigid than heavy metal. The cemented carbide base material must be ground with a relatively large-diameter disk-shaped diamond grinding wheel. Therefore, when forming grooves in the base material with a diamond grinding wheel, the grinding wheel may interfere with, for example, the brazing surface around the grooves. If a diamond grinding wheel is provided to have a small diameter to prevent interference, the machining time increases significantly. For this reason, end mills including cemented carbide as base material and having PCD tips in each of a plurality of adjacent grooves have not been manufactured. Only grooves of limited shapes, such as simple straight grooves, have been formed in the cemented carbide base material to which the PCD tips are joined.

For example, in the end mills described in JP2021-053794A, JP2013-528504A, JP2019-508270A, and JP2015-510845A, the cutting-edge geometry is formed on the base material. Therefore, they do not have a structure in which a plurality of PCD tips with cutting-edges are joined. The base material may be, for example, cemented carbide, and diamond coating or the like is applied to the surface. Tips with cutting-edges such as PCD tips with cutting-edges are joined to the end mills or milling machines described in JP5674815B, JP5986254B, and JP7244970B. To machine grooves into which cutting tips are joined, the material of the base material needs to be limited to, for example, tool steel. Furthermore, to machine a plurality of grooves into which respective cutting tips are joined so as not to interfere with each other, it is necessary to widen the interval between the grooves. Therefore, the number of cutting tips that can be joined is reduced. Consequently, end mills including a rigid base material with a slender shape and a large number of PCD tips joined thereto have not conventionally been provided.

### [Disclosure of the Invention]

### [Problem to be solved by the Invention]

Therefore, there has been a conventional need for end mills with a base material having high rigidity and a plurality of PCD tips, which can be manufactured at low cost.

### [Means for solving the Problem]

According to one aspect of the present disclosure, an end mill has a rod-shaped base material made of cemented carbide. Two to four flutes extend along a surface of the base material with a helix angle of 0° to 45° with respect to the base material's axial direction. A normal cutting-edge groove extends linearly between the flutes. The normal cutting-edge, which is a PCD tip, is disposed in a normal cutting-edge groove and protrudes from the normal cutting-edge groove. A cutting-edge lead angle of the normal cutting-edge is 15° to 55°. A reverse cutting-edge groove is located farther from an end of the base material than the normal cutting-edge groove and extends linearly between the flutes. The reverse cutting-edge, which is a PCD tip, is disposed in the reverse cutting-edge groove and protrudes from the reverse cutting-edge groove. A cutting-edge lead angle of the reverse cutting-edge is -55° to -15°.

This configuration may allow the flutes, the normal cutting-edge groove and the reverse cutting-edge groove, and the normal cutting-edge grooves, and the reverse cutting-edge grooves to be spaced apart from one another. Therefore, when the flutes, the normal cutting-edge groove and reverse cutting-edge groove are machined with a rotary grinding wheel, it is possible to prevent the grinding wheel from interfering with other structures on the surface of the base material, such as the flutes, the normal cutting-edge groove and the reverse cutting-edge groove. This configuration allows the base material made of highly rigid cemented carbide to be machined with the rotary grinding wheel having a relatively large diameter. The manufacturing cost of end mills is thus reduced substantially.

According to another aspect of the present disclosure, the maximum cutter diameter of the cutting-edge of the end mill with normal cutting-edge and reverse cutting-edge is 6 mm to 30 mm. Therefore, by providing the base material with a rigid cemented carbide material, the durability of the base material against cutting vibration when machining the workpiece can be increased. For example, the end mill may be used for high feed machining by increasing the feed rate. In addition, the end mill may be provided with a slender shape that has a longer cutter length relative to the maximum cutter diameter. This allows the end mill to be used, for example, to machine a router groove with a deep groove depth relative to the groove width into the workpiece. It is also possible to hollow out thick plates even if the maximum cutter diameter is small.

Another aspect of the present disclosure relates to a method for manufacturing an end mill. A rod-shaped base material made of cemented carbide is prepared. A disk-shaped first rotary grinding wheel is rotated around its axis and moved relative to the base material to form two to four flutes extending axially on a surface of the base material. A disk-shaped second rotary grinding wheel is rotated around its axis and moved relative to the base material to form a normal cutting-edge groove that extends linearly between the flutes and has a positive cutting-edge lead angle. The disk-shaped second rotary grinding wheel is rotated around its axis to form a reverse cutting-edge groove that extends linearly between the flutes at a location farther from an end of the base material than the normal cutting-edge groove, and has a negative cutting-edge lead angle. A plate-shaped PCD tip to serve as the normal cutting-edge, is brazed to the normal cutting-edge groove, and a plate-shaped PCD tip to serve as the reverse cutting-edge, is brazed to the reverse cutting-edge groove.

Two to four flutes may be formed in the rod-shaped base material made of cemented carbide with the first rotary grinding wheel having a relatively large diameter. When forming each flute, the first rotary grinding wheel may be prevented from interfering with other flutes. After forming the flutes, the second rotary grinding wheel having a relatively large diameter may form the normal cutting-edge groove and the reverse cutting-edge groove between the flutes. When forming each normal cutting-edge groove and each reverse cutting-edge groove, the second rotary grinding wheel may be prevented from interfering with the flutes, another normal cutting-edge groove, and another reverse cutting-edge groove. This allows a base material made of rigid cemented carbide to be machined with the first rotary grinding wheel and the second rotary grinding wheel, which have relatively large diameters. Further, the normal cutting-edge groove is machined into a flat shape to allow the PCD tip as a normal cutting-edge with a positive cutting-edge lead angle to be easily brazed. The reverse cutting-edge groove is machined into a flat shape to allow the PCD tip as a reverse cutting-edge with a negative cutting-edge lead angle to be brazed. Thus, the machining time of the end mill may be shortened, and the manufacturing cost of the end mill may be reduced. The first rotary grinding wheel and the second rotary grinding wheel may be the same grinding wheel or a different grinding wheel.

### [Brief Description of Drawings]

FIG. 1 is a perspective view of an end mill according to an embodiment of the present disclosure.
FIG. 2 is a side view of the end mill with a normal cutting-edge on the front side.
FIG. 3 is a side view of the end mill with one of reverse cutting-edges on the front side.
FIG. 4 is a schematic perspective view of a machining center.
FIG. 5 is a perspective view of a base material when flutes are machined.
FIG. 6 is a perspective view of the base material when a normal cutting-edge groove is machined.
FIG. 7 is a perspective view of the base material when reverse cutting-edge grooves are machined.
FIG. 8 is a perspective view of the base material when reverse cutting-edge grooves are machined.
FIG. 9 is a flowchart for machining the end mill.
FIG. 10 is a perspective view illustrating the processing of a conventional base material made of steel.
FIG. 11 is a schematic perspective view of a case in which a rotary grinding wheel is used to process the base material having a conventional shape.

### [Embodiments for carrying out the Invention]

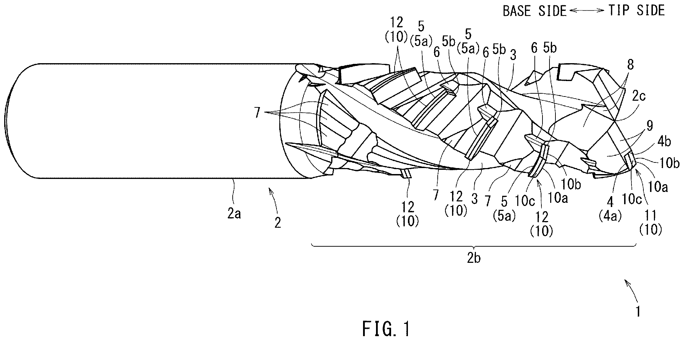

One embodiment of the present disclosure will be described with reference to FIGS. 1 to 9. The same reference numerals used in the description denote the same elements having the same functions, and redundant explanation thereof will be omitted. As shown in FIG. 1, an end mill 1 has a rod-shaped base material 2 and a plurality of PCD tips 10 joined to the base material 2. The base material 2 has a tip 2c, a cutting section (surface) 2b provided in an area from the tip 2c at a predetermined distance, and a cylindrical shank 2a provided on the opposite side of the tip 2c. In the following description, the tip 2c side will be referred to as a tip side and the shank 2a side will be referred to as a base side. The end mill 1 can machine, for example, cutting, grooving and machining end faces in wooden workpieces such as wood boards, solid wood, laminated wood, or plywood. Alternatively, the end mill 1 can machine non-ferrous workpieces such as aluminum and copper. Alternatively, the end mill 1 can machine materials such as resin and ceramic materials.

As shown in FIGS. 1 to 3, the base material 2 is made of cemented carbide. The cemented carbide base material 2 is less expensive and has a rigidity that is about 1.6 times higher than that of heavy metal. The PCD tip 10 has a substantially rectangular plate-shape having a PCD (polycrystalline diamond sintered material) cutting-edge 10a. The cutting-edge 10a is an intersection of a rake face 10b and a flank 10c. The cutting-edge 10a extends in a curved shape so that outer diameter of the end mill 1 is substantially constant. The workpiece is cut by the tip end of the cutting-edge 10a. The PCD tip 10 is brazed to the cutting section 2b of the base material 2 by a brazing material, such as silver solder.

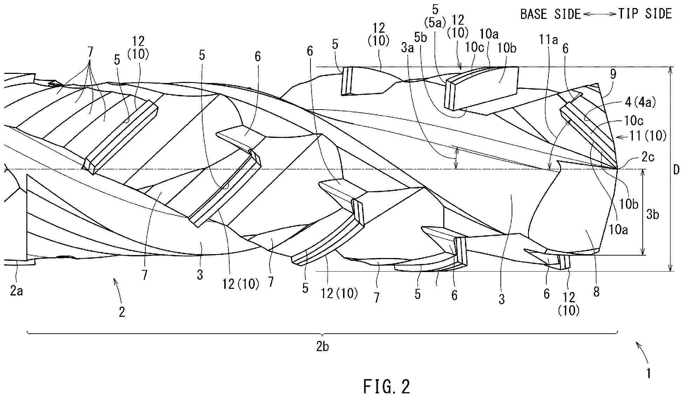

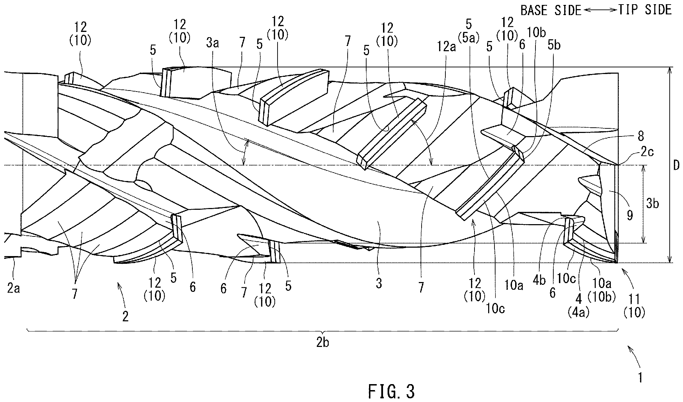

As shown in FIGS. 2 and 3, a cutter length (axial length) of the cutting section 2b may be from 10 mm to 60 mm. The maximum cutter diameter D of the end mill 1 is twice the distance (radius) from the cutting-edge 10a of the PCD tip 10 on one end of the end mill 1 in the radial direction to the axial center. The maximum cutter diameter D may be from 6 mm to 30 mm, from 10 mm to 20 mm, from 12 mm to 16 mm.

As shown in FIGS. 1 to 3, the cutting section 2b is formed with flutes 3 extending in a helical manner. In this embodiment, two flutes 3 are provided. The two flutes 3 divide the cutting section 2b of the base material 2 equally in the circumferential direction. The two flutes 3 are provided at intervals of 180° in the circumferential direction of the base material 2. One or more flutes 3 are provided, for example, three or four flutes 3 may be provided. In the case of three flutes 3, the flutes 3 may be provided at 120° intervals in the circumferential direction of the base material 2. In the case of four flutes 3, the flutes 3 are provided at 90° intervals in the circumferential direction. The flutes 3 extend from the tip side to the base side on a surface of the cutting section 2b in a clockwise direction. The flute 3 is provided at a helix angle 3a of 0° to 45° with respect to the axial direction of base material 2. The helix angle 3a of the flute 3 may be, for example, 5° or more, 10° or more, 32° or more. The helix angle 3a may be, for example, 32° or less, 35° or less, 45° or less. The lower limitation value and the upper limitation value of the helix angle 3a may be selected from these values. The width 3b of the flute 3 may be, for example, 25% or more, approximately 40% or more of the maximum cutter diameter D of the end mill 1. The width 3b may be, for example, approximately 40% or less, 45% or less of the maximum cutter diameter D. Various combinations of lower limitation value and upper limitation value of the width 3b are possible.

The plurality of PCD tips 10 include a normal cutting-edge 11 with a positive cutting-edge lead angle 11a as shown in FIG. 2 and a reverse cutting-edge 12 with a negative cutting-edge lead angle 12a as shown in FIG. 3. The lead angles 11a and 12a of the cutting-edges are angles formed by an extending direction of the cutting-edge 10a relative to the axial direction of the base material 2. The lead angles 11a and 12a of the cutting-edges are positive when the tip side of the cutting-edge 10a cuts into the workpiece before the base side, and negative when the base side of the cutting-edge 10a cuts into the workpiece before the tip side. The normal cutting-edges 11 are provided in a plurality of succession on the tip 2c side of the base material 2, or one on the tip 2c side. All PCD tips 10 that are closer to the base side than the normal cutting-edge 11 are provided as a reverse cutting-edge 12. The normal cutting-edge 11 pushes the workpiece toward the base side during cutting. The reverse cutting-edge 12 pushes the workpiece toward the tip side during cutting. Therefore, the normal cutting-edge 11 and the reverse cutting-edge 12 work together to clamp the workpiece in the axial direction of the base material 2 during cutting. This prevents surface chipping, corner chipping, burrs, and remaining uncut portions without causing the sheet attached to the surface of the wood board to peel off during cutting.

As shown in FIGS. 1 to 3, the base material 2 has two projections extending helically between the two flutes 3. A plurality of PCD tips 10 are joined between the two flutes 3 at substantially constant intervals along the extending direction of the flutes 3. In this embodiment, one normal cutting-edge 11 is provided at the tip 2c. The plurality of PCD tips 10 joined farther from the tip 2c than the one normal cutting-edge 11 are all reverse cutting-edges 12. The cutting-edge lead angle 11a of the normal cutting-edge 11 may be, for example, 5° or more, 15° or more, 30° or more, 45° or more. The lead angle 11a may be, for example, 45° or less, 55° or less, 65° or less. Various combinations of lower limitation value and upper limitation value for the lead angle 11a are possible. The cutting-edge lead angle 12a of the reverse cutting-edge 12 may be, for example, -65° or more, -55° or more, -45° or more. The lead angle 12a may be, for example, -5° or less, -15° or less, and -45° or less. Various combinations of lower limitation value and upper limitation value of the lead angle 12a are possible.

As shown in FIGS. 1 to 3, the base material 2 is provided with a normal cutting-edge groove 4, to which the normal cutting-edge 11 is joined, and reverse cutting-edge grooves 5, to which the reverse cutting-edges 12 are joined. The normal cutting-edge groove 4 has a first brazing surface 4a and a second brazing surface 4b that intersect each other. The first brazing surface 4a extends planarly along the cutting-edge 10a of the normal cutting-edge 11. The second brazing surface 4b extends planarly perpendicular to the first brazing surface 4a. The normal cutting-edge groove 4 extends linearly in a direction inclined at the cutting-edge lead angle 11a with respect to the axial direction of the base material 2. The reverse cutting-edge groove 5 has a first brazing surface 5a and a second brazing surface 5b that intersect each other. The first brazing surface 5a extends planarly along the cutting-edge 10a of the reverse cutting-edge 12. The second brazing surface 5b extends planarly perpendicular to the first brazing surface 5a. The reverse cutting-edge groove 5 extends linearly in a direction inclined at the cutting-edge lead angle 12a with respect to the axial direction of the base material 2.

As shown in FIGS. 1 to 3, the base material 2 is provided with a back groove 6 that communicates with the normal cutting-edge groove 4 and the reverse cutting-edge groove 5. The back groove 6 is recessed radially inward from radially outer edges of the normal cutting-edge groove 4 and the reverse cutting-edge groove 5. The back groove 6 of the normal cutting-edge groove 4 is located on the base side of the normal cutting-edge groove 4. The back groove 6 of the reverse cutting-edge groove 5 is located at the tip side of the reverse cutting-edge groove 5. The back groove 6 is formed with a narrower groove width and a shallower groove bottom than the normal cutting-edge groove 4 and the reverse cutting-edge groove 5. The back groove 6 extends from the reverse cutting-edge groove 5 to the base side along the extending direction of the flute 3. By providing the back groove 6, cutting chips generated during cutting workpiece can be smoothly discharged from around the cutting-edge 10a of the PCD tip 10 to the rear (base side) in the direction of rotation. The base material 2 is provided with a base metal relief 7 on the base side with respect to the flute 3 and the reverse cutting-edge groove 5. The base metal relief 7 extends from the base side region of the reverse cutting-edge groove 5 to the base side and communicates with the flute 3. The base metal relief 7 is provided to prevent the rotary grinding wheel from interfering with the base material 2 when re-polishing the cutting-edge 10a of the PCD tip 10 joined to the base material 2.

As shown in FIGS. 1 to 3, a gash 8 is formed on the base material 2 between the tip 2c of the base material 2 and the flute 3. The gash 8 is a groove configured to communicate the tip 2c of base material 2 and the flute 3. A bottom cutting-edge relief 9 that is slightly inclined with respect to the direction orthogonal to the axial direction of the base material 2 is formed at the tip 2c of the base material 2. The tip of the base material 2 is formed in a substantially conical shape due to the bottom cutting-edge relief 9.

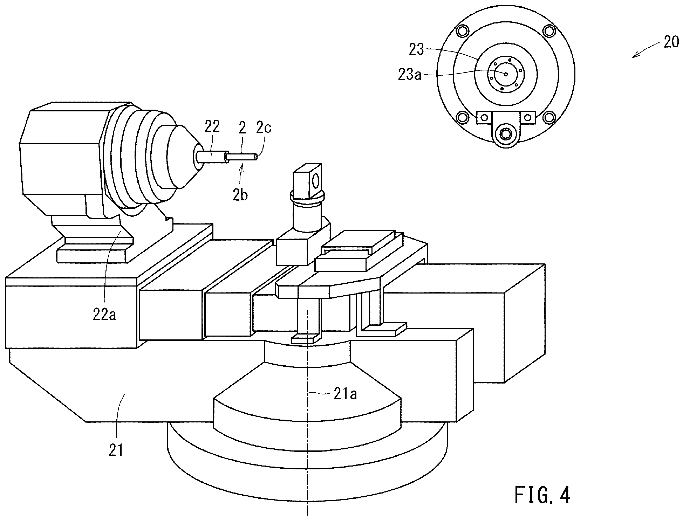

As shown in FIG. 4, a machining center 20 for processing the base material 2 has a tool holder 22 for holding the base material 2, a holder supporting portion 22a for supporting the tool holder 22, and a table 21 for supporting the holder supporting portion 22a from below. The table 21 is rotatable in the horizontal direction around an axis of rotation 21a extending in an up-down direction. The holder supporting portion 22a is movably supported in the horizontal direction (left-right direction as seen in FIG. 4) with respect to the table 21. The tool holder 22 is configured to move the held base material 2 in the up-down direction or in the horizontal direction (front and back direction as seen in FIG. 4) with respect to the axial direction of the base material 2. The tool holder 22 can also rotate the base material 2 around its axis. The tool holder 22 can also tilt the axial direction of the base material 2. The machining center 20 has a rotary grinding wheel 23, which is a disk-shaped diamond grinding wheel. The rotary grinding wheel 23 rotates around the axis of rotation 23a located at the center of the disk shape. The base material 2 held in the tool holder 22 is moved or rotated or tilted around the axis while the cutting section 2b is brought into contact with the rotary grinding wheel 23 rotating at a predetermined position. The cutting section 2b is then ground by the rotary grinding wheel 23 into the shape shown in FIG. 1.

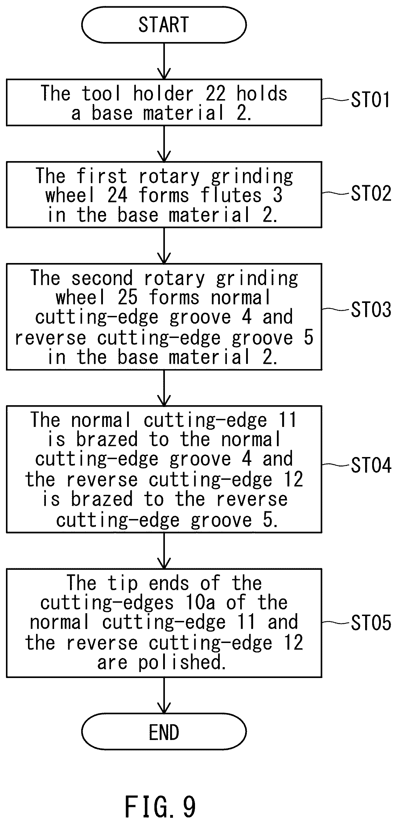

Next, a method for manufacturing the end mill 1 will be described. First, as shown in FIG. 4, the tool holder 22 holds a cylindrical base material 2 made of cemented carbide (ST01 in FIG. 9). The base material 2 is held in the tool holder 22 with the cutting section 2b exposed.

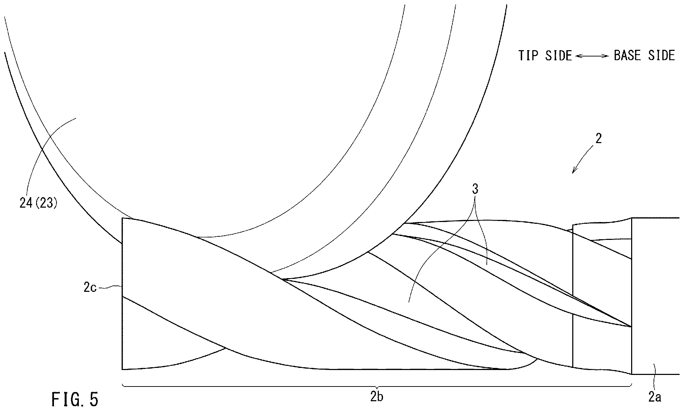

As shown in FIG. 5, a disk-shaped first rotary grinding wheel 24 is prepared as the rotary grinding wheel 23. The first rotary grinding wheel 24 has a disk-shaped body on the right side of FIG. 5 and a truncated cone-shaped complement on the left side of FIG. 5. The outer diameter of the first rotary grinding wheel 24 may be, for example, 40 mm or more, 60 mm or more, or 80 mm or more. The outer diameter of the first rotary grinding wheel 24 may be, for example, 80 mm or less, 150 mm or less, or 200 mm or less. Various combinations of lower limitation value and upper limitation value of the outer diameter of the first rotary grinding wheel 24 are possible. The thickness of the disk body of the first rotary grinding wheel 24 is substantially the same length as the width 3b of the flute 3 (see FIGS. 2 and 3) and may be from 4 mm to 8 mm. The base material 2 is moved relative to the first rotary grinding wheel 24 while rotating around the axis. At this time, the extending direction of the base material 2 is inclined at a helix angle 3a (see FIGS. 2 and 3) with respect to the extending direction of the first rotary grinding wheel 24. The rotating first rotary grinding wheel 24 moves relative to the cutting section 2b of the base material 2 to grind. The rotary grinding wheel 1 24 thereby forms a flute 3 with the helix angle 3a in the cutting section 2b of the base material 2 (ST02 in FIG. 9). The base material 2 is rotated 180° around the axis to form the flute 3 in the same manner. As a result, two flutes 3 are formed at 180° intervals in the circumferential direction of the base material 2.

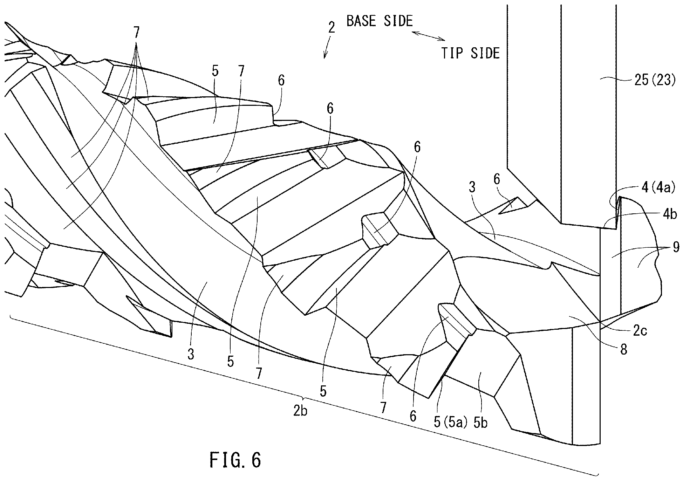

As shown in FIG. 6, disk-shaped second rotary grinding wheel 25, may be prepared as the rotary grinding wheel 23. The second rotary grinding wheel 25 has a disk-shaped body on the right side of FIG. 6 and a truncated cone-shaped complement on the left side of FIG. 6. The outer diameter of the second rotary grinding wheel 25 may be 40 mm or more, 60 mm or more, or 80 mm or more. The outer diameter of the second rotary grinding wheel 25 may be 80 mm or less, 150 mm or less, or 200 mm or less. Various combinations of lower limitation value and upper limitation value for the outer diameter of the second rotary grinding wheel 25 are possible. The thickness of the disk body of the second rotary grinding wheel 25 may be from 4 mm to 8 mm. The base material 2 is maintained in an inclined position at the cutting-edge lead angle 11a (see FIG. 2) with respect to the extending direction of the second rotary grinding wheel 25. The second rotary grinding wheel 25 is placed on the position where the normal cutting-edge groove 4 is to be formed. The second rotary grinding wheel 25 is moved relative to the cutting section 2b of the base material 2. The lateral face of the second rotary grinding wheel 25 forms a first brazing face 4a of the normal cutting-edge groove 4. A radial end face of the second rotary grinding wheel 25 forms a second brazing face 4b of the normal cutting-edge groove 4. At this time, the second rotary grinding wheel 25 can grind the normal cutting-edge groove 4 without interfering with the flute 3 or the reverse cutting-edge groove 5. Thus, the second rotary grinding wheel 25 forms the normal cutting-edge groove 4 in the cutting section 2b of the base material 2 (ST03 in FIG. 9). The normal cutting-edge groove 4 extends linearly, inclined at the cutting-edge lead angle 11a with respect to the axial direction of the base material 2.

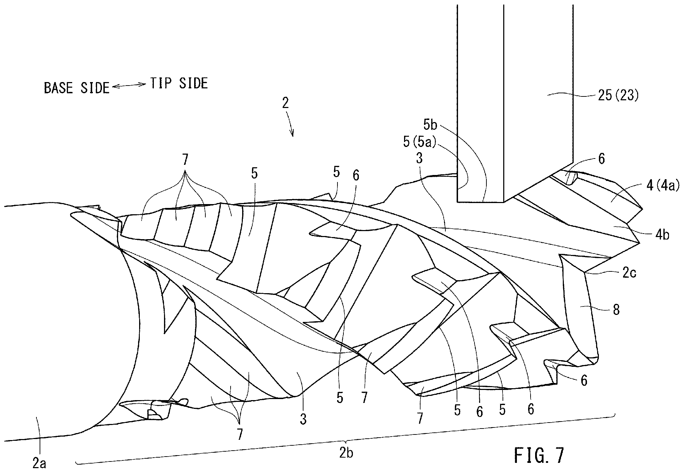

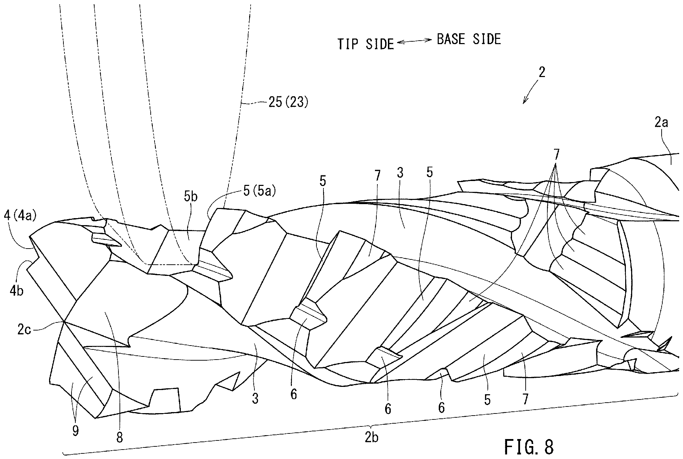

As shown in FIGS. 7 and 8, the base material 2 is maintained in an inclined position at the cutting-edge lead angle 12a (see FIG. 3) with respect to the extending direction of the second rotary grinding wheel 25. The second rotary grinding wheel 25 is moved relative to the cutting section 2b of the base material 2 while the second rotary grinding wheel 25 is brought into contact with the position where the reverse cutting-edge groove 5 is to be formed. The lateral face of the rotating second rotary grinding wheel 25 is formed by grinding a first brazing face 5a of the reverse cutting-edge groove 5. The radial end face of the rotating second rotary grinding wheel 25 is formed by grinding a second brazing face 5b of the reverse cutting-edge groove 5. At this time, the second rotary grinding wheel 25 can grind the reverse cutting-edge groove 5 without interfering with the flute 3, the normal cutting-edge groove 4, or the other reverse cutting-edge grooves 5. Thus, the second rotary grinding wheel 25 forms the reverse cutting-edge groove 5 in the cutting section 2b of the base material 2 (ST03 in FIG. 9). The reverse cutting-edge groove 5 extends linearly, inclined at the cutting-edge lead angle 12a with respect to the axial direction of the base material 2.

As shown in FIGS. 6 to 8, after forming the normal cutting-edge groove 4 and the reverse cutting-edge grooves 5, the back groove 6, the base metal relief 7, the gash 8, and the bottom edge relief 9 may be formed by grinding with the rotary grinding wheel 23. In Figures, all the structures formed in the cutting section 2b are shown, but in reality, each structure is ground and formed in each order to be ground. The rotary grinding wheel 23 that grinds the back groove 6, the base metal relief 7, the gash 8, and the bottom edge relief 9 may be the same as the first rotary grinding wheel 24 or the second rotary grinding wheel 25, or may be a third rotary grinding wheel. The rotary grinding wheel 23 does not interfere with other structures to be formed in the cutting section 2b, such as the flute 3, the normal cutting-edge groove 4, and the reverse cutting-edge groove 5, when grinding the back groove 6, the base metal relief 7, the gash 8, and the bottom edge relief 9.

As shown in FIG. 1, the PCD tips 10 as the normal cutting-edge 11 are brazed to the first brazing face 4a and the second brazing face 4b of the normal cutting-edge groove 4 with a brazing material such as silver solder. The PCD tips 10 as the reverse cutting-edges 12 are brazed to the first brazing faces 5a and the second brazing faces 5b of the reverse cutting-edge grooves 5 with a brazing material such as silver solder (ST04 in FIG. 9). The cutting-edge 10a of the normal cutting-edge 11 and the cutting-edge 10a of the reverse cutting-edge 12 are polished with a grindstone or the like to sharpen the tip end (ST05 in FIG. 9), providing the end mill 1. The end mill 1 with the base material 2 made of cemented carbide can be manufactured by the above procedure at approximately the same manufacturing cost as when a base material of the same shape is made of steel. The end mill 1 with the base material 2 made of cemented carbide can be manufactured by the above procedure at 1/3 of the manufacturing cost when the base material of the same shape is made of heavy metal.

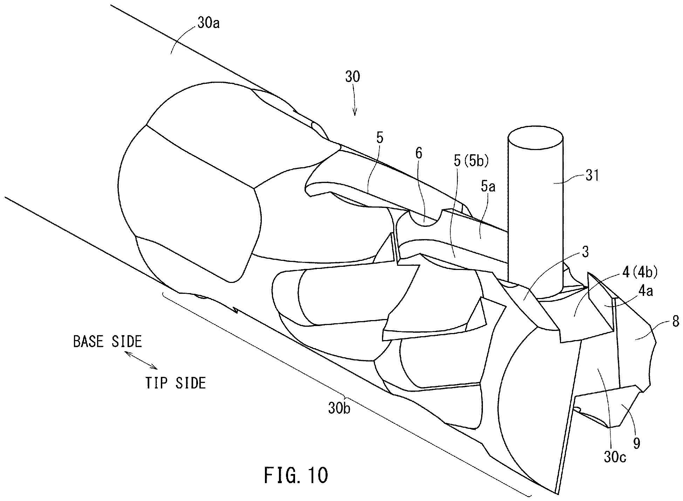

FIG. 10 shows a conventional case when a base material 30 made of steel is machined with a small-diameter end mill 31. The base material 30 has an end 30c, a cutting section (surface) 30b provided in an area at a predetermined distance from the end 30c, and a cylindrical shank 30a provided at the base side opposite to the end 30c. The maximum cutter diameter of the end mill 31 may be, for example, 4 mm. When machining the base material 30 made of steel with the end mill 31, time required for machining may be, for example, 50 minutes. When the material of the base material 30 is replaced with cemented carbide, it is necessary to change the end mill 31 to a cylindrical small-diameter grinding wheel for machining. This increases the number of steps, and machining time requires, for example, 4 hours or more, which is four times or more longer than that for steel. When machining a narrow groove in the base material 30 made of steel, for example, an end mill 31 with a maximum outer diameter of 2 mm may also be used. In this case, because the number of steps further increases, the machining time for the base material 30 becomes even longer. Therefore, if the base material 30 made of cemented carbide is to be machined with a cylindrical small-diameter grinding wheel, manufacturing cost will be higher than that of the base material 30 made of steel.

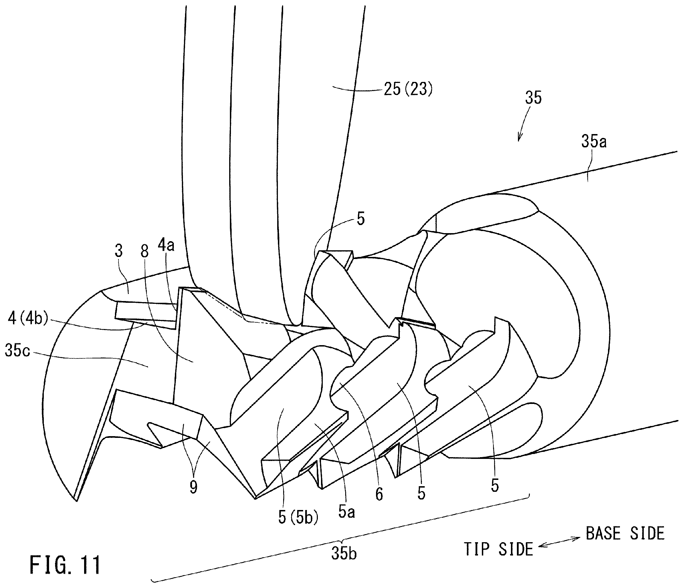

FIG. 11 shows a case in which a conventionally shaped base material 35 made of cemented carbide is machined with a rotary grinding wheel 23. The base material 35 has an end 35c, a cutting section (surface) 35b provided in an area at a predetermined distance from the end 35c, and a cylindrical shank 35a provided at the base side opposite to the end 35c. For example, when a reverse cutting-edge groove 5 is machined in the base material 35 with the rotary grinding wheel 23, the normal cutting-edge groove 4 and the other reverse cutting-edge groove 5 are provided at a position where these interfere with the rotary grinding wheel 23. Therefore, it is not possible to grind with the rotary grinding wheel 23, which has a relatively large diameter. If the diameter of the rotary grinding wheel 23 is reduced, the machining time will be longer, and the manufacturing cost will increase. It is possible to reduce the cutting-edge lead angles of the normal cutting-edge and reverse cutting-edge that are brazed in the normal cutting-edge groove 4 and the reverse cutting-edge groove 5 to prevent the rotary grinding wheel 23 from interfering. However, if the cutting-edge lead angles of the normal cutting-edge and the reverse cutting-edge is reduced, cutting resistance increases, resulting in poor machining quality. Also, it is difficult to increase the number of cutting-edges. For example, as shown in FIG. 1, by forming the base material 2 to have a shape as described in the present embodiment, it is possible to provide an end mill 1 made of cemented carbide with high rigidity and high cutting performance. Moreover, the manufacturing cost may be reduced using the rotary grinding wheel 23.

As shown in FIGS. 2 and 3, the end mill 1 has a rod-shaped base material 2 made of cemented carbide. The end mill 1 has two to four flutes 3 extending on the surface of the base material 2 with a helix angle 3a of 0° to 45° with respect to the axial direction of the base material 2. The end mill 1 also has a normal cutting-edge groove 4 extending linearly between the flutes 3. The end mill 1 has a normal cutting-edge 11, which is a PCD tip 10 disposed in the normal cutting-edge groove 4 and having a cutting-edge protruding from the normal cutting-edge groove 4 at a lead angle 11a of 15° to 55°. The end mill 1 has a reverse cutting-edge groove 5 located farther from the end of the base material 2 than the normal cutting-edge groove 4 and extending linearly between the flutes 3. The end mill 1 has a reverse cutting-edge 12 which is a PCD tip 10 disposed in the reverse cutting-edge groove 5 and having a cutting-edge protruding from the reverse cutting-edge groove 5 at a lead angle 12a of -55° to -15°.

Therefore, the flutes 3, the normal cutting-edge groove 4 and the reverse cutting-edge groove 5, the normal cutting-edge grooves 4, and the reverse cutting-edge grooves 5 may be spaced apart from one another. This prevents the rotary grinding wheel 23 from interfering with other structures of the cutting section (surface) 2b of the base material 2, for example, the flute 3, the normal cutting-edge groove 4, the reverse cutting-edge groove 5 and the like when machining the flute 3, the normal cutting-edge groove 4 and the reverse cutting-edge groove 5 with the rotary grinding wheel 23 (see FIGS. 5 to 8). As a result, the base material 2 made of rigid cemented carbide can be machined with the rotary grinding wheel 23, having a relatively large diameter. Therefore, the machining time of the end mill 1 may be shortened and the manufacturing cost of the end mill 1 may be suppressed.

As shown in FIGS. 2 and 3, the maximum cutter diameter D of the cutting-edge of the end mill 1 with normal cutting-edge 11 and reverse cutting-edge 12 is 6 mm to 30 mm. By providing the base material 2 with a rigid cemented carbide material, the durability of the base material 2 against cutting vibration when machining the workpiece can be increased. Therefore, the end mill 1 may be used for high feed machining by increasing the feed rate. In addition, the end mill 1 may be provided with a slender shape with a longer cutter length of the cutting section 2b relative to the maximum cutter diameter D. This allows the end mill 1 to be used, for example, to machine a router groove with a deep groove depth relative to the groove width into the workpiece. It is also possible to hollow out thick plates even if the maximum cutter diameter D is small.

As shown in FIGS. 2 to 8, a rod-shaped base material 2 made of cemented carbide is prepared. A disk-shaped first rotary grinding wheel 24 is rotated around its axis and moved relative to the base material 2 to form two to four flutes 3 extending axially on the surface of the base material 2. A disk-shaped second rotary grinding wheel 25 is rotated around its axis and moved relative to the base material 2 to form a normal cutting-edge groove 4 that extends linearly between the flutes 3 and has a positive cutting-edge lead angle 11a. The disk-shaped second rotary grinding wheel 25 is rotated around its axis to form a reverse cutting-edge groove 5 that extends linearly between the flutes 3 at a location farther from the end of the base material 2 than the normal cutting-edge groove 4, and has a negative cutting-edge lead angle 12a. A plate-shaped PCD tip 10 to serve as the normal cutting-edge 11, is brazed to the normal cutting-edge groove 4, and a plate-shaped PCD tip 10 to serve as the reverse cutting-edge 12, is brazed to the reverse cutting-edge groove 5.

Therefore, two to four flutes 3 may be formed in a rod-shaped base material 2 made of cemented carbide with the first rotary grinding wheel 24 having a relatively large diameter. When forming each flute 3, the first rotary grinding wheel 24 may be prevented from interfering with other flutes 3. After forming the flutes 3, the normal cutting-edge grooves 4 and the reverse cutting-edge grooves 5 may be formed between the flutes 3 with the second rotary grinding wheel 25 having a relatively large diameter. When forming each normal cutting-edge groove 4 and each reverse cutting-edge groove 5, the second rotary grinding wheel 25 may be prevented from interfering with the flutes 3, other normal cutting-edge grooves 4, and other reverse cutting-edge grooves 5. This allows a base material 2 made of rigid cemented carbide to be machined with the first rotary grinding wheel 24 and the second rotary grinding wheel 25, which have relatively large diameters. Further, the normal cutting-edge groove 4 is machined in a flat shape to allow the PCD tip 10 as a normal cutting-edge 11 with a positive cutting-edge lead angle 11a to be easily brazed. The reverse cutting-edge groove 5 is machined in a flat shape to allow the PCD tip 10 as a reverse cutting-edge 12 with a negative cutting-edge lead angle 12a to be brazed. Thus, the machining time of the end mill 1 may be shortened and the manufacturing cost of the end mill 1 may be reduced.

Various modifications may be made to the end mill 1 of the present embodiments described above. For example, a base material 2 with two flutes 3 has been described as an example. Instead of this, the base material 2 may be provided with three or four flutes 3. An end mill 1 with one normal cutting-edge 11 and the remaining PCD tips 10 are all reverse cutting-edges 12, has been described as an example. Instead, a plurality of normal cutting-edges 11 may be provided on the tip 2c side of the base material 2. The number of PCD tips 10 joined to the base material 2 may be increased or decreased from the number as described as the example.

The dimensions exemplified in this embodiment, such as the maximum cutter diameter D and cutter length (axial length of the cutting section 2b) of the end mill 1, the width 3b of the flute 3, and the outer diameter and thickness of the rotary grinding wheel 23, may be changed as necessary. The angles exemplified in this embodiment, such as the helix angle 3a of the flute 3, the cutting-edge lead angle 11a of the normal cutting-edge 11, and the cutting-edge lead angle 12a of the reverse cutting-edge 12, may be changed as necessary. The helix direction of the flute 3 may be reversed with the turning direction of the end mill 1 considered as a reverse direction. The positions and the numbers of the back groove 6, the base metal relief 7, the gash 8, and the bottom edge relief 9 may be changed as necessary.

The rotary grinding wheels 23 may be different for forming the normal cutting-edge groove 4 and the reverse cutting-edge groove 5, respectively. The order in which the normal cutting-edge groove 4 and the reverse cutting-edge groove 5 are formed shall not be limited to the order as described as an example but may be changed as appropriate. The order in which the back groove 6, the base metal relief 7, the gash 8, and the bottom cutting-edge relief 9 are formed shall not be limited to the order as described as an example but may be changed as appropriate.

The first rotary grinding wheel and the second rotary grinding wheel may be the same grinding wheel or different grinding wheel.

## Claims

1. An end mill comprising:
a rod-shaped base material made of cemented carbide;
two to four flutes extending along a surface of the base material with a helix angle of 0° to 45° with respect to an axial direction of the base material;
a normal cutting-edge groove extending linearly between the flutes;
a normal cutting-edge, which is a PCD tip disposed in the normal cutting-edge groove, having a cutting-edge that protrudes from the normal cutting-edge groove at a lead angle of 15° to 55°;
a reverse cutting-edge groove, which is located farther from an end of the base material than the normal cutting-edge groove, extending linearly between the flutes; and
a reverse cutting-edge, which is a PCD tip disposed in the reverse cutting-edge groove, having a cutting-edge that protrudes from the reverse cutting-edge groove at a cutting-edge lead angle of -55° to -15°.

2. The end mill according to claim 1, wherein a maximum cutter diameter of the cutting-edge of the end mill with the normal cutting-edge and the reverse cutting-edge is 6 mm to 30 mm.

3. A method for manufacturing an end mill comprising:
preparing a rod-shaped base material made of cemented carbide;
forming two to four flutes extending axially along a surface of the base material by rotating a disk-shaped first rotary grinding wheel around its axis and moving the first rotary grinding wheel relative to the base material;
forming a normal cutting-edge groove and a reverse cutting-edge groove by rotating a disk-shaped second rotary grinding wheel around its axis and moving the second rotary grinding wheel relative to the base material, wherein:
the normal cutting-edge groove extends linearly between the flutes and has a positive cutting-edge lead angle, and
the reverse cutting-edge groove extends linearly between the flutes at a location farther from an end of the base material than the normal cutting-edge groove and has a negative cutting-edge lead angle,
brazing a plate-shaped PCD tip, which serves as the normal cutting-edge, to the normal cutting-edge groove, and
brazing a plate-shaped PCD tip, which serves as the reverse cutting-edge, to the reverse cutting-edge groove.
